# EUROPÄISCHE PATENTSCHRIFT

(11) **EP 1 076 278 B1**
(45) Veröffentlichungstag und Bekanntmachung des Hinweises auf die Patenterteilung: **26.11.2003**
(21) Anmeldenummer: 00116076.1
(22) Anmeldetag: 27.07.2000
(51) Int. Cl.: G05D 16/20, G05D 16/10

(54) **Hydraulisches Ventil, insbesondere verstellbares Druckregelventil**
Hydraulic valve, in particular an adjustable pressure control valve
Vanne hydraulique, en particulier une vanne de régulation de pression réglable

(30) Priorität: 11.08.1999 DE 19937969
(43) Veröffentlichungstag der Anmeldung: 14.02.2001
(73) Patentinhaber: Hydraulik-Ring GmbH, 09212 Limbach-Oberfrohna (DE)
(72) Erfinder: Neuhaus, Rolf, Dr., 97816 Lohr/Main (DE); Urlaub, Bernd,, 97854 Steinfeld (DE); Zapf, Friedrich,, 97753 Karlstadt (DE); Zaiser, Liebhart, 97753 Karlstadt (DE)
(74) Vertreter: Jackisch-Kohl, Anna-Katharina

(56) Entgegenhaltungen:
- DE-A- 4 122 376
- DE-A- 4 221 757
- US-A- 4 250 922
- US-A- 4 491 153
- US-A- 5 306 076

## Beschreibung

Die Erfindung geht aus von einem hydraulischen Ventil, das insbesondere als verstellbares Druckregelventil ausgebildet ist und das die Merkmale aus dem Oberbegriff des Patentanspruchs 1 aufweist

Ein Druckregelventil mit einem Elektromagneten und mit einem Hydraulikteil, der ein als Einbaubuchse ausgebildetes Ventilgehäuse mit einer axial verlaufenden Ventilbohrung und einen in der Ventilbohrung axial bewegbaren Ventilschieber aufweist, ist z.B. aus der DE 41 22 376 C2 bekannt Die Ventilbohrung ist an drei axial voneinander beabstandeten Stellen über Radialbohrungen mit dem Außenbereich des Ventilgehäuses verbunden. Dabei befindet sich dem Elektromagneten am nächsten ein Niederdruckbereich, über den Druckmittel zu einem Tank abfließen kann. Am weitesten vom Elektromagneten entfernt ist ein Hochdruckbereich, dem Druckmittel von einer Druckmittelquelle zufließt. Zwischen den beiden erwähnten Bereichen befindet sich der Regeldruckbereich, in dem von dem Ventil ein Druck eingeregelt wird, dessen Höhe von der Höhe des durch die Wicklung des Elektromagneten fließenden Stromes abhängt Der Regeldruck wirkt nämlich an einer Wirkfläche des Ventilschiebers im Sinne einer Verbindung des Regeldruckbereichs mit dem Niederdruckbereich und steigt auf einen solchen Wert an, bis am Ventilschieber zwischen den vom Elektromagneten, vom Regeldruck und von einer evt. vorhandenen Feder erzeugten Kräften ein Gleichgewicht herrscht.

Das in der DE 41 22 376 C2 gezeigte Druckregelventil ist ein solches mit einer steigenden Kennlinie. Das bedeutet, daß der Regeldruck mit zunehmender Stärke des durch die Wicklung des Elektromagneten fließendes Stromes zunimmt. Bei einem solchen Druckregelventil wirken die vom Regeldruck erzeugte Kraft und die vom Elektromagneten erzeugte Kraft entgegengesetzt auf den Ventilschieber. Die eine Stirnseite des Ventilschiebers und die Hohlräume des Elektromagneten sind fluidisch mit dem Niederdruckbereich verbunden. Dieser Verbindung dient eine Axialbohrung, die exzentrisch zur Ventilbohrung in das Ventilgehäuse eingebracht ist und in eine der Radialbohrungen mündet, die zwischen dem Niederdruckbereich außen am Ventilgehäuse und der Ventilbohrung verlaufen.

Der Erfindung liegt das gesetzte Ziel zugrunde, ein hydraulisches Ventil mit den Merkmalen aus dem Oberbegriff des Patentanspruchs 1 so weiterzuentwickeln, daß die auf den Ventilschieber wirkenden Druckkräfte allenfalls geringfügig davon abhängen, ob und wie Druckmittel durch das Ventil strömt.

Das gesetzte Ziel wird bei einem hydraulischen Ventil mit den Merkmalen aus dem Oberbegriff des Patentanspruchs 1 gemäß dem kennzeichnenden Teil dieses Patentanspruchs dadurch erreicht, daß die fluidische Verbindung zwischen dem Fluidraum, der sich zwischen dem Polschuh und dem Ventilgehäuse befindet, und dem Niederdruckbereich außerhalb einer Radialbohrung liegt, die sich in einer fluidischen Verbindung zwischen der Ventilbohrung und dem Niederdruckbereich befindet. Bei einem erfindungsgemäßen hydraulischen Ventil hat die Veränderung des statischen Druckes im Druckmittel, die mit einer Veränderung der Druckmittelströmung einhergeht, nur einen sehr geringen Einfluß auf den an der einen Stirnseite des Ventilschiebers und in den Hohlräumen des Elektromagneten herrschenden Druck. Somit ist auch das Kraftniveau, auf dem am Ventilschieber ein Kräftegleichgewicht erreicht wird, wenig davon abhängig, ob nun Druckmittel aus der Ventilbohrung zum Niederdruckbereich außerhalb des Ventilgehäuses strömt oder nicht. Ist das hydraulische Ventil ein Druckregelventil, so wird der Regeldruck sehr genau eingehalten. Allgemein sind die Hohlräume im Elektromagneten und der Raum vor der einen Stirnseite des Ventilschiebers nicht unmittelbar an die durch die Radialbohrung stattfindende Druckmittelströmung angebunden, in der sich Schmutzteilchen befinden können, so daß durch die erfindungsgemäße Ausbildung eines hydraulischen Ventils auch die Verschmutzung der genannten Räume vermieden wird und damit eine lange Betriebsdauer des hydraulischen Ventils gewährleistet ist

Vorteilhafte Ausgestaltungen eines erfindungsgemäßen hydraulischen Ventils kann man den Unteransprüchen entnehmen.

Ganz besonders vorteilhaft erscheint dabei die Ausbildung gemäß Patentanspruch 3, nach der aus dem einen umlaufenden Kanal darstellenden Niederdruckbereich das Druckmittel an einer bestimmten Stelle des Umfangs abströmt und eine Ausgleichsradialbohrung, die in der fluidischen Verbindung zwischen dem Fluidraum und dem Niederdruckbereich liegt, der Abströmstelle gegenüberliegend in den Niederdruckbereich mündet. Der Abströmstelle gegenüberliegend läßt sich der Einfluß des strömenden Druckmittels auf den statischen Druck besonders gering halten. Besonders bevorzugt ist dabei die Ausgestaltung gemäß Patentanspruch 4. Danach verlaufen zwischen dem Niederdruckbereich und der Ventilbohrung eine ungerade Anzahl von gleichmäßig über den Umfang des Ventilgehäuses verteilten Ablaufradialbohrungen, wobei eine dieser Ablaufradialbohrungen auf die Abströmstelle ausgerichtet ist und dieser Ablaufradialbohrung die Ausgleichsradialbohrung gegenüberliegt. Insbesondere mündet nun die Ausgleichsradialbohrung an einer Stelle in den umlaufenden Kanal, an der kein Druckmittel strömt, so daß die Mündung der Ausgleichsradialbohrung nicht einer Druckmittelströmung ausgesetzt ist, die dauernd Schmutzteilchen aus dem hydraulischen Kreislauf herantransportiert, die in die Strömungstoträume im Elektromagneten und vor der einen Stirnseite des Ventilschiebers gelangen könnten.

Gemäß Patentanspruch 6 ist der Ankerstößel im Polschuh dicht gleitend geführt und liegt in der fluidischen Verbindung zwischen dem Fluidraum und dem Ankerraum im Elektromagneten eine Axialbohrung des Ankerstößels, die an der sich innerhalb des Ankerraums befindlichen Stirnseite des Ankerstößels offen ist. Auf diese Weise ist der Kanal zwischen dem Fluidraum und dem Ankerraum sehr lang. Der bei einer Bewegung des Magnetankers notwendige Ausgleich für die Zunahme oder die Abnahme des freien Volumens des Ankerraums durch Zufluß oder Abfluß von Druckmittel in den bzw. aus dem Ankerraum führt zu einer Verschiebung der Druckmittelsäule nur innerhalb des Kanals zwischen dem Ankerraum und dem Fluidraum, so daß der Ankerraum sehr wirkungsvoll gegen Verschrnutzung geschützt ist. Die fluidische Verbindung zwischen den beiden Ankerteilräumen vor den beiden Stirnseiten des Magnetankers wird auf vorteilhafte Weise entsprechend den Patentansprüchen 7, 8 oder 9 hergestellt.

Bei einem Druckregelventil wird das Kräftegleichgewicht am Ventilschieber nicht nur durch den vor der einen Stirnseite des Ventilschiebers herrschenden Niederdruck sondern auch durch den an der anderen Stirnseite herrschenden Regeldruck beeinflußt. Gemäß Patentanspruch 10 wird auch der an der einen Stirnseite des Ventilschiebers anstehende Regeldruck besonders wenig durch die Druckmittelströmung beeinflußt, wenn ein Fluidpfad zwischen dem Regeldruckraum und einem Druckraum vor der einen Stirnseite des Ventilschiebers außerhalb der zwischen dem Regeldruckraum und der Ventilbohrung verlaufenden Radialbohrungen liegt. Es wird hier im Hinblick auf den Regeldruckraum und den Druckraum vor der einen Stirnseite des Ventilschiebers dasselbe Prinzip wie hinsichtlich des Niederdruckraums und hinsichtlich der anderen Stirnseite des Ventilschiebers angewandt. Dabei sei darauf hingewiesen, daß der Einfluß einer Druckmittelströmung auf das Kräftegleichgewicht am Ventilschieber auch schon durch die bloße Anwendung der in Patentanspruch 10 explizit genannten Merkmale verringert wird und deshalb eine Ausbildung gemäß Patentanspruch 10 auch ohne Verwirklichung der Merkmale aus dem Patentanspruch 1 schon vorteilhaft ist.

Vorteilhafte Ausgestaltungen des hydraulischen Ventils nach Patentanspruch 10 finden sich in den Patentansprüchen 11 bis 13.

Ein als Druckregelventil ausgebildetes Ausführungsbeispiel eines erfindungsgemäßen hydraulischen Ventils ist in der Zeichnung dargestellt. Anhand der Figuren dieser Zeichnung wird die Erfindung nun näher erläutert.

Es zeigen
- Figur 1: einen in der Achse der Ventilbohrung und des Elektromagneten liegenden Längsschnitt durch das Ausführungsbeispiel und
- Figur 2: einen Schnitt entlang der Linie II-II aus Figur 1.

Das gezeigte hydraulische Druckregelventil weist einen Elektromagneten 10 und einen Hydraulikteil 11 auf. Letzterer besteht im wesentlichen aus einem außen rotationssymmetrischen Ventilgehäuse 12, das nach Art einer Bundbuchse gestaltet ist und zentrisch eine durchgehende Axialbohrung 13 besitzt, und aus einem Ventilschieber 14, der in der Axialbohrung axial beweglich geführt ist Radial außen an dem Ventilgehäuse 12 lassen sich drei Druckbereiche P, A und T voneinander unterscheiden, die durch zwei in umlaufende Nuten eingelegte O-Ringe 15 und 16 gegeneinander abgedichtet sind. Der Druckbereich T befindet sich außern an einem erweiterten scheibenförmigen Abschnitt 17 des Ventilgehäuses 12. Von ihm aus fließt Druckmittel zu einem Vorratsbehälter zurück. Er wird deshalb als Niederdruckbereich bezeichnet. Die beiden Druckbereich A und P befinden sich in einem hülsenförmigen Abschnitt 18 des Ventilgehäuses 12. Dem Druckbereich P fließt Druckmittel von einer Druckmittelquelle unter Druck zu. Dieser Bereich wird deshalb im folgenden als Hochdruckbereich bezeichnet. Im Druckbereich A, der sich axial zwischen dem Niederdruckbereich T und dem Hochdruckbereich P befindet, wird ein Regeldruck eingeregelt. Der Druckbereich A sei deshalb im folgenden als Regeldruckbereich bezeichnet Der Raum 20 vor der freien Stirnseite 19 des Gehäuseabschnitts 18 einschließlich eines von der Stirnseite 19 ausgehenden erweiterten Abschnitts der Axialbohrung 13 ist durch einen weiteren um das Ventilgehäuse 12 umlaufenden O-Ring 21 vom Hochdruckbereich P fluidisch getrennt.

Zwischen jedem Druckbereich P, A und T und der Axialbohrung 13 verlaufen jeweils drei Radialbohrungen 25 bzw. 26 bzw. 27. Die jeweils drei Radialbohrungen zwischen einem Druckbereich und der Axialbohrung 13 sind mit gleichen Winkelabständen über den Umfang des Ventilgehäuses 12 verteilt, haben also einen Winkelabstand von 120 Grad zueinander.

Der Elektromagnet 10 besitzt ein tiefgezogenes topfförmiges Blechgehäuse 30, auf dessen Boden ein erster Polschuh 31 aufgelegt ist, der mit einem flanschartigen Abschnitt axial und radial am Blechgehäuse 30 anliegt und mit einem rohrförmigen Abschnitt 32 in die ebenfalls in das Blechgehäuse 30 eingesetzte Magnetspule 33 etwa bis zu deren halber Höhe hineinragt. Von der anderen Seite ragt ein zweiter Polschuh 34 in die Magnetspule 33 hinein. Auch dieser liegt mit einem flanschartigen Abschnitt radial innen am Blechgehäuse 30 an. Dem anderen Polschuh 31 zugekehrt weist der Polschuh 34 einen Konus 35 auf, wie er charakteristisch für Proportionalmagnete ist, bei denen die Magnetkraft weitgehend unabhängig vom Hub allein von der Höhe des durch die Wicklung des Magneten fließenden Stromes abhängt. Axial zwischen dem flanschartigen Abschnitt des Polschuhs 34 und der Magnetspule 33 befindet sich eine Wellscheibe 36, durch die ein axiales Spiel zwischen den Teilen 31, 33 und 34 ausgeglichen wird. Eine aus einem dünnen nichtmagnetischen Blech hergestellte Büchse 37 umfaßt den in die Magnetspule 33 hineinragenden Abschnitt des Polschuhs 34, verjüngt sich vor dem Konus 35 und steckt in dem Polschuh 31.

Der von der Büchse 37 und dem Polschuh 34 eingeschlossene Ankerraum nimmt den Magnetanker 40 auf, durch den zentral eine gestufte Bohrung 41 hindurchgeht, deren Abschnitt mit größerem Durchmesser zum Polschuh 34 und deren Abschnitt mit kleinerem Durchmesser zum Boden des Blechgehäuses 30 hin offen ist. In den Bohrungsabschnitt mit größerem Durchmesser ist ein Ankerstößels 42 eingesetzt, wobei die Preßlänge etwa zwei Dritteln der axialen Erstreckung des Magnetankers 40 entspricht und sich die zum Boden des Blechgehäuses 30 zeigende Stirnseite des Ankerstößels 42 in einem kleinen Abstand von der Stufe zwischen den beiden Bohrungsabschnitt befindet Der Ankerstößel 42 ist in einer zentralen Lagerbohrung 43 des Polschuhs 34 dicht gleitend geführt und ragt in eine zentrische Ausdrehung 44 hinein, die in die dem Ankerraum abgewandte Stirnseite 45 des Polschuhs 34 eingebracht ist Von seinem dem Magnetanker 40 entfernten Ende her ist der Ankerstößel 42 über eine gewisse Strecke außen auf ein Maß abgedreht, das kleiner als der Durchmesser der Ventilbohrung 13 ist Der Ankerstößel 42 kann deshalb ohne die Gefahr des Anstoßens in die Ventilbohrung 13 des axial an dem Polschuh 34 anliegenden Ventilgehäuses 12 eintauchen.

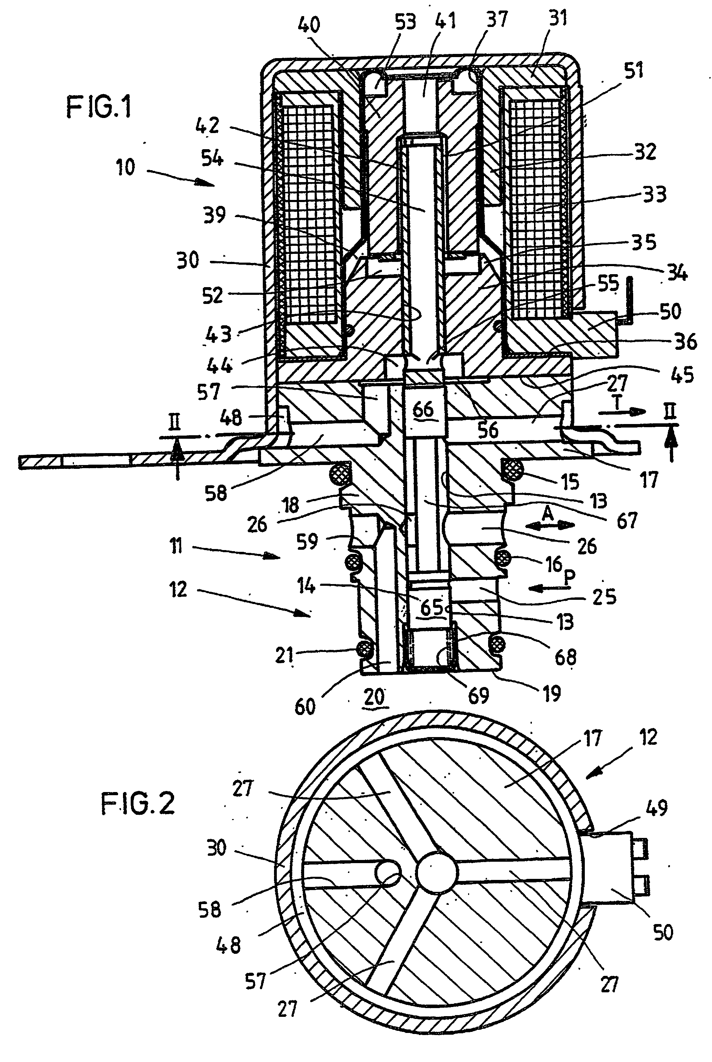

Das Blechgehäuse 30 des Elektromagneten 10 überragt den Polschuh 34 und umgibt den scheibenförmigen Abschnitt 17 des Ventilgehäuses 12. In diesem scheibenförmigen Abschnitt 17 läuft außen eine Ringnut 48 herum, die bis auf einen begrenzten Winkelbereich vom Blechgehäuse 30 abgedeckt wird, so daß zwischen dem scheibenförmigen Abschnitt 17 und dem Blechgehäuse 30 des Elektromagneten 10 ein im Querschnitt geschlossener Ringkanal entstanden ist, der an einer bestimmten Stelle radial nach außen geöffnet ist An dieser Stelle befindet sich im Blechgehäuse 30 ein Ausschnitt 49, der nicht nur dazu dient, Druckmittel aus dem Ringkanal 48 nach außen abfließen zu lassen, sondern auch dazu, um ein elektrisches Anschlußteil 50 aus dem Innern des Blechgehäuses 30 radial nach außen treten zu lassen. Insbesondere aus Figur 2 ist deutlich ersichtlich, daß eine der Radialbohrungen 27, die den zum Niederdruckbereich T gehörenden Ringkanal 48 mit der Axialbohrung 13 verbinden, genau in der Ausströmstelle 49 nach außen tritt. Auch für den Regeldruckbereich A ist die Anordnung ähnlich getroffen. In Verlängerung der in Figur 1 gezeigten Radialbohrung 26 fließt Druckmittel vom Regeldruckbereich A ab oder dem Regeldruckbereich A zu.

In der Wand des im Querschnitt größeren Abschnitts der Bohrung 41 des Magnetankers 40 sind mehrere Längsrinnen 51 eingebracht, über die außen am Ankerstößel 42 entlang die beiden Ankerteilräume 52 und 53 vor den beiden Stirnseiten des Magnetankers 40 unter Einbeziehung des kleineren Abschnitts der Bohrung 41 fluidisch miteinander verbunden sind. Außerdem ist der gesamte Ankerraum 39 fluidisch zum Niederdruckbereich T hin offen. Dieser offenen Verbindung dient zunächst eine Axialbohrung 54, die von der dem Boden des Blechgehäuses 30 zugewandten Stirnseite des Ankerstößels 42 in diesen eingebracht ist und bis kurz vor dessen andere Stirnseite reicht. Durch eine Querbohrung 55 ist die Axialbohrung 54 in jeder Position des Ankerstößels zur Ausdrehung 44 hin offen. In der dem Polschuh zugewandten Stirnseite des Ventilgehäuses 12 befindet sich zentral eine zur Ausdrehung 44 im Polschuh 34 hin offene Senkung 56, die zwar nicht so tief wie die Ausdrehung 44 ist, jedoch einen größeren Durchmesser hat In die Senkung 56 mündet eine parallel zur Ventilbohrung 13 verlaufende axiale Sackbohrung 57, die an ihrem Ende in eine in der Ebene der drei Radialbohrungen 27 liegenden radialen Sackbohrung 58 übergeht, die zum Ringkanal 48 offen, zur Ventilbohrung 13 jedoch geschlossen ist. Wie besonders deutlich aus Figur 2 ersichtlich, mündet die Radialbohrung 58 der Ausströmstelle 49 von Druckmittel aus dem Ringkanal 48 genau gegenüberliegend in den Ringkanal 48. Außerdem befindet sich die Radialbohrung 58 genau zwischen zwei der Radialbohrungen 27. An der Stelle, an der die Radialbohrung 58 in den Ringkanal 48 mündet, herrscht somit praktisch keine Druckmittelströmung, die auf einen Abfluß von Druckmittel vom Regeldruckbereich A zum Niederdruckbereich T zurückzuführen wäre.

Ähnlich wie im Niederdruckbereich T liegt auch im Regeldruckbereich A der einen Radialbohrung 26 eine radiale Sackbohrung 59 gegenüber, die zum Regeldruckbereich A hin offen, zur Ventilbohrung 13 hin jedoch geschlossen ist In die Radialbohrung 59 mündet eine axiale Sackbohrung 60, die von der Stirnseite 19 des Ventilgehäuses 20 ausgeht, so daß durch die Bohrungen 59 und 60 eine fluidische Verbindung vom Regeldruckbereich A zu dem Raum 20 geschaffen ist.

Der Ventilschieber 14 besitzt zwei Schieberbunde 65 und 66, deren lichter axialer Abstand voneinander gleich dem lichten axialen Abstand der Radialbohrungen 25 von den Radialbohrungen 27 ist und die durch eine Kolbenstange 67, deren Durchmesser wesentlich kleiner als der Durchmesser der Ventilbohrung 13 ist, miteinander verbunden sind. Der Ventilschieber 14 wird im Sinne einer fluidischen Verbindung zwischen dem Regeldruckbereich A und dem Niederdruckbereich T von einer in einem Käfig 68 gehaltenen schwachen Druckfeder 69 und von dem im Raum 20 herrschenden Regeldruck beaufschlagt. In Gegenrichtung und im Sinne einer Verbindung des Regeldruckbereichs A mit dem Hochdruckbereich P wirkt auf den Ventilschieber eine Magnetkraft, die vom Magnetanker 40 über den Ankerstößel 42 ausgeübt wird.

In Figur 1 ist das Ventil in einem Zustand gezeigt, in dem der Elektromagnet nicht bestromt ist und keine Kraft auf den Ventilschieber 14 ausübt. Der Regeldruckbereich A ist mit dem Niederdruckbereich T fluidisch verbunden. Der Magnetanker befindet sich am Boden der Büchse 37 in seinem größten axialen Abstand von dem Polschuh 34. Wird nun durch die Wicklung des Elektromagneten ein Strom geschickt, so bewegt sich der Magnetanker 40 auf den Polschuh 34 zu, verschiebt dadurch den Ventilschieber 14 gegen die Kraft der Druckfeder 69 und sorgt dadurch für eine fluidische Verbindung zwischen dem Regeldruckbereich A und dem Hochdruckbereich P. Während der Bewegung des Magnetankers 40 hat das freie Volumen im Ankerraum 39 zugenommen, da der Ankerstößel 42 zum Teil aus dem Ankerraum herausgeschoben worden ist Die Zunahme des freien Ankerraumvolumens wird durch den Zufluß von Druckmittel über die Axialbohrung 54 und die Querbohrung 55 im Ankerstößel 42, über den Raum 44, den Raum 56 sowie über die Bohrungen 57 und 58 aus dem Ringkanal 48 ausgeglichen. Dabei ist die Zunahme an freiem Ankerraumvolumen jedoch nicht so groß, daß Druckmittel, das vorher im Ringkanal 48 gewesen war, nun in den Ankerraum 39 gelangt. Es findet lediglich eine Verschiebung der Flüssigkeitssäule innerhalb des aufgezeigten Flüssigkeitspfades statt. Dabei ist das Volumen der Bohrungen 57 und 58 schon größer als das Ausgleichsvolumen, so daß kein Druckmittel aus dem Ringkanal 48 in die Räume 44 und 56 strömen muß, so daß nicht nur der Ankerraum und damit die Lagerstelle zwischen dem Magnetanker 40 und der Büchse 37, sondern auch die Lagerbohrung 43 und somit die Lagerung des Ankerstößels 42 im Polschuh 34 vor Verschmutzung geschützt ist

Nach einer Verbindung des Regeldruckbereichs A mit dem Hochdruckbereich P steigt der Druck im Regeldruckbereich A und im Raum 20 an, so daß sich die auf den Ventilschieber 14 gegen die Magnetkraft gerichtete Kraft erhöht und den Ventilschieber schließlich in Richtung auf den Polschuh 34 hin verschiebt, bis die Radialbohrungen 25 durch den Schieberbund 65 verschlossen sind. Nun wird durch Aufsteuem des Regeldruckbereichs A zum Niederdruckbereich oder zum Hochdruckbereich mit kleinen Bewegungen des Ventilschiebers 14 im Regeldruckbereich ein der Magnetkraft entsprechender Druck aufrechterhalten. Wird die Magnetspule vom Stromkreis getrennt, so wird der Ventilschieber 14 durch die Druckfeder 69 wieder in die in Figur 1 gezeigte Lage gebracht. Während des Zurückschiebens des Ventilschiebers 14 nimmt das freie Volumen im Ankerraum 39 ab. Es muß deshalb Druckmittel aus dem Ankerraum über die Bohrungen im Ankerstößel 42 die Räume 44 und 56 sowie die Bohrungen 57 und 58 verdrängt werden, wobei auch jetzt wieder nur eine Verschiebung der Flüssigkeitssäule stattfindet.

## Patentansprüche

1. Hydraulisches Ventil, insbesondere proportional verstellbares Druckregelventil, mit einem Elektromagneten (10), der eine Spule (33) und einen beweglichen Magnetanker (40) aufweist, der sich in einem von der Spule (33) umgebenen und axial durch einen in die Spule (33) hineinragenden Polschuh (34) begrenzten Ankerraum (39) befindet und mit dem ein Ankerstößel (42) verbunden. ist, der durch eine zentrale Bohrung (43) des Polschuhs (34) hindurchtritt,
mit einem Hydraulikteil (11), der ein als Einbaubuch ausgebildetes Ventilgehäuse (12), das axial an dem Polschuh (34) anliegt und eine axial verlaufende Ventilbohrung (13) besitzt, die über zumindest eine Radialbohrung (27) mit einem das Ventilgehäuse (12) umgebenden Niederdruckbereich (T) verbunden ist, und der einen sich in der Ventilbohrung (13) befindlichen Ventilschieber (14) aufweist, der vom Magnetanker (40) über den Ankerstößel (42) axial bewegbar ist, wobei zwischen dem Polschuh (34) und dem Ventilgehäuse (12) ein Fluidraum (44, 56) gebildet ist, von dem eine offene fluidische Verbindung einerseits zum Ankerraum (39) und andererseits zu dem das Ventilgehäuse (12) umgebenden Niederdruckbereich (T) besteht,
**dadurch gekennzeichnet,**
**daß** die fluidische Verbindung zwischen dem Fluidraum (44, 56) und dem Niederdruckbereich (T) außerhalb einer Radialbohrung (27) liegt, die sich in einer fluidischen Verbindung zwischen der Ventilbohrung (13) und dem Niederdruckbereich (T) befindet.

2. Hydraulisches Ventil nach Anspruch 1, **dadurch gekennzeichnet, daß** die fluidische Verbindung zwischen dem Fluidraum (44, 56) und dem Niederdruckbereich (T) in einer zum Fluidraum (44, 56) hin offene blinde Ausgleichsaxialbohrung (57) und durch eine nach außen in den Niederdruckbereich (T) offene, die Ausgleichsaxialbohrung (57) treffende und im Abstand zur Ventilbohrung (13) endende Ausgleichsradialbohrung (58) besteht.

3. Hydraulisches Ventil nach Anspruch 2, **dadurch gekennzeichnet, daß** der Niederdruckbereich (T) zumindest nach dem Einbau des Ventilgehäuses (12) in eine Einbaubohrung einen umlaufenden Kanal (48) mit einer Abströmstelle (49) ist und daß die Ausgleichsradialbohrung (48) der Abströmstelle (49) gegenüberliegend in den Niederdruckbereich (T) mündet.

4. Hydraulisches Ventil nach Anspruch 3, **dadurch gekennzeichnet, daß** zwischen dem Niederdruckbereich (T) und der Ventilbohrung (13) eine ungerade Anzahl von gleichmäßig über den Umfang des Ventilgehäuses (12) verteilte Ablaufradialbohrungen (27) verlaufen, daß eine dieser Ablaufradialbohrungen (27) auf die Abströmstelle (49) ausgerichtet ist und daß dieser Ablaufradialbohrung (27) die Ausgleichsradialbohrung (58) gegenüberliegt.

5. Hydraulisches Ventil nach einem vorhergehenden Anspruch, **dadurch gekennzeichnet, daß** das Ventilgehäuse (12) einen scheibenförmigen Abschnitt (17) aufweist, der in ein topfartiges Blechgehäuse (30) des Elektromagneten (10) eingeschoben ist und der außen mit einer Ringnut (48) versehen ist, die vom Blechgehäuse (30) bis auf eine Stelle (49), an der das Blechgehäuse (30) ausgeschnitten ist, überdeckt ist und die den Niederdruckbereich (T) darstellt.

6. Hydraulisches Ventil nach einem vorhergehenden Anspruch, **dadurch gekennzeichnet, daß** der Ankerstößel (42) in einem zentralen Durchgang (41) des Magnetankers (40) befestigt und im Polschuh (34) dicht gleitend geführt ist, daß in der fluidischen Verbindung zwischen dem Fluidraum (44, 56) und dem Ankerraum (39) eine Axialbohrung (54) des Ankerstößels (42) liegt, die an der sich innerhalb des Ankerraums (39) befindlichen Stirnseite des Ankerstößels (42) offen ist und daß die beiden Ankerteilräume (52, 53) vor den beiden Stirnseiten des Magnetankers (40) über diesen fluidisch miteinander verbunden sind.

7. Hydraulisches Ventil nach Anspruch 6, **dadurch gekennzeichnet, daß** die beiden Ankerteilräume (52, 53) über zumindest einen Kanal (51) zwischen dem im Magnetanker (40) steckenden Abschnitt des Ankerstößels (42) und dem Magnetanker (40) fluidisch miteinander verbunden sind.

8. Hydraulisches Ventil nach Anspruch 7, **dadurch gekennzeichnet, daß** der Ankerstößel (42) außen kreisrund ist und der Kanal (51) durch eine Abweichung des Querschnitts des zentralen Durchgangs (41) im Magnetanker (40) von der Kreisform gebildet ist.

9. Hydraulisches Ventil nach Anspruch 7 oder 8, **dadurch gekennzeichnet, daß** der Kanal (51) axial verläuft.

10. Hydraulisches Ventil nach einem vorhergehenden Anspruch, **dadurch gekennzeichnet, daß** es ein durch einen Elektromagneten (10) proportional verstellbares Druckregelventil ist, das ein als Einbaubuchse ausgebildetes Ventilgehäuse (12) mit einer axial verlaufende Ventilbohrung (13), die über jeweils mindestens eine Radialbohrung (25, 26, 27) mit einem umlaufenden äußeren Hochdruckraum (P), einem umlaufenden äußeren Niederdruckraum (T) und einem axial zwischen Hochdruckraum (P) und Niederdruckraum (T) umlaufenden Regeldruckraum (A) verbunden ist; und einen sich in der Ventilbohrung (13) befindlichen Ventilschieber (14) aufweist, der im Sinne einer Verbindung des Regeldruckraums (A) mit dem Hochdruckraum (P) von einer Magnetkraft und im Sinne .einer Verbindung des Regeldruckraums (A) mit dem Niederdruckraum (T) vom Regeldruck beaufschlagbar ist, wobei ein Fluidpfad (59, 60) zwischen dem Regeldruckraum (A) und einem Druckraum (20), der sich am dem Elektromagneten (10) abgewandten Ende des Ventilgehäuses (12) vor dem Ventilschieber (14) befindet, außerhalb der zwischen dem Regeldruckraum (A) und der Ventilbohrung (13) verlaufenden Radialbohrungen (26) liegt.

11. Hydraulisches Ventil nach Anspruch 10, **dadurch gekennzeichnet, daß** der Fluidpfad eine blinde Axialbohrung (60), die zur Stirnseite (19) des Ventilgehäuses (12) hin offen ist, und eine zum Regeldruckraum (A) hin offene, die Axialbohrung (60) treffende und im Abstand zur Ventilbohrung (13) endende Radialbohrung (59) umfaßt.

12. Hydraulisches Ventil nach Anspruch 11, **dadurch gekennzeichnet, daß** der Regeldruckbereich (A) zumindest nach dem Einbau des Ventilgehäuses (12) in eine Einbäubohrung eine bestimmte Ab- und Zuströmstelle hat und daß die Radialbohrung (59) des Fluidpfads (59, 60) der Abströmstelle gegenüberliegend in den Regeldruckbereich (A) mündet.

13. Hydraulisches Ventil nach Anspruch 12, **dadurch gekennzeichnet, daß** zwischen dem Regeldruckbereich (A) und der Ventilbohrung (13) eine ungerade Anzahl von gleichmäßig über den Umfang des Ventilgehäuses (12) verteilte Radialbohrungen (26) verlaufen, daß eine dieser Radialbohrungen (26) auf die Abströmstelle ausgerichtet ist und daß dieser Radialbohrung (26) die Radialbohrung (59) des Fluidpfads (59, 60) gegenüberliegt.

## Claims

1. A hydraulic valve, in particular a proportionally adjustable pressure-control valve, having an electromagnet (10) which has a coil (33) and a movable armature (40) which is positioned in an armature chamber (39) surrounded by the coil (33) and axially delimited by a pole piece (34) projecting into the coil (33), and to which an armature ram (42) is connected which passes through a central bore (43) of the pole piece (34),
having a hydraulic part (11) which has a valve housing (12) in the form of a sleeve insert, which housing is adjacent to the pole piece (34) and has a valve bore (13) following an axial course, which bore is connected by means of at least one radial bore (27) to a low-pressure region (T) surrounding the valve housing (12) and which hydraulic part has a valve slider (14) positioned within the valve bore (13), which valve slider is axially movable from the armature (40) via the armature ram (42), a fluid space (44, 56) being formed between the pole piece (34) and the valve housing (12), from which fluid space an open fluid connection exists on the one hand to the armature chamber (39) and on the other hand to the low-pressure region (T) surrounding the valve housing (12), **characterised in that**
the fluid connection between the fluid space (44, 56) and the low-pressure region (T) is positioned outside a radial bore which is in a fluid connection between the valve bore (13) and the low-pressure region (T).

2. A hydraulic valve according to Claim 1, **characterised in that** the fluid connection between the fluid space (44, 56) and the low-pressure region (T) consists of a compensating axial blind bore (57) which is open in the direction of the fluid space (44, 56) and exists through a compensating radial bore (58) which is open towards the outside into the low-pressure region (T), meets the compensating axial bore (57) and ends at a distance from the valve bore (13).

3. A hydraulic valve according to Claim 2, **characterised in that** the low-pressure region (T) - at least after incorporation of the valve housing (12) into a mounting bore - is an encircling channel (48) with a outflow point (49) and **in that** the compensating radial bore (48) opens into the low-pressure region (T) opposite the outflow point (49).

4. A hydraulic valve according to Claim 3, **characterised in that** an uneven number of run-off radial bores (27) evenly distributed around the circumference of the valve housing (12) follow a course between the low-pressure region (T) and the valve bore (13), **in that** one of these run-off radial bores (27) is directed towards the outflow point (49) and **in that** this run-off radial bore (27) is positioned opposite the compensating radial bore (58).

5. A hydraulic valve according to a preceding claim, **characterised in that** the valve housing (12) has a disc-shaped portion (17) which is inserted into a cup-like sheet-metal housing (30) of the electromagnet (10) and which is provided on the outside with an annular groove (48) which is covered by the sheet-metal housing (30) with the exception of a point (49) at which the sheet-metal housing (30) is cut out and which represents the low-pressure region (T).

6. A hydraulic valve according to a preceding claim, **characterised in that** the armature ram (42) is fastened in a central passage (41) of the armature (40) and is tightly slideably guided in the pole piece (34), and that an axial bore (54) of the armature ram (42) is positioned within the fluid connection between the fluid space (44, 56) and the armature chamber (39), which axial bore is open on the front face of the armature ram (42) located within the armature chamber (39), and **in that** the two armature partial chambers (52, 53) in front of the two front faces of the armature (40) are in fluid connection with one another via the said armature.

7. A hydraulic valve according to Claim 6,**characterised in that** the two armature partial chambers (52, 53) are in fluid connection with one another via at least one channel (51) between the portion of the armature ram (42) inserted into the armature (40) and the armature (40).

8. A hydraulic valve according to Claim 7,**characterised in that** the armature ram (42) is circular on the outside and the channel (51) is formed by a departure of the cross-section of the central passage (41) in the armature (40) from a circular shape.

9. A hydraulic valve according to Claim 7 or 8, **characterised in that** the channel (51) follows an axial course.

10. A hydraulic valve according to a preceding claim, **characterised in that** it is a pressure-control valve proportionally adjustable by an electromagnet (10), which pressure-control valve has a valve housing (12) in the form of a sleeve insert with a valve bore (13) which follows an axial course and is connected via in each case at least one radial bore (25, 26, 27) with an encircling outer high-pressure chamber (P), an encircling outer low-pressure chamber (T) and a control-pressure chamber (A) axially encircling between the high-pressure chamber (P) and the low-pressure chamber (T), and a valve slider (14) positioned in the valve bore (13), which valve slider is actuable in the sense of a connection of the control-pressure chamber (A) with a high-pressure chamber (P) by a magnetic force and in the sense of a connection of the control-pressure chamber (A) with the low-pressure chamber (T) by the control pressure, in association with which a fluid pathway (59, 60) between the control-pressure chamber (A) and a pressure chamber (20) located in front of the valve slider (14) on the end of the valve housing (12) facing away from the electromagnet (10) is positioned outside the radial bores (26) following a course between the control-pressure chamber (A) and the valve bore (13).

11. A hydraulic valve according to Claim 10, **characterised in that** the fluid pathway comprises an axial blind bore (60) which is open towards the front face (19) of the valve housing (12) and a radial bore (59) which is open towards the control-pressure chamber (A), meets the axial bore (60) and ends at a distance from the valve bore (13).

12. A hydraulic valve according to Claim 11, **characterised in that** the control-pressure region (A) - at least after incorporation of the valve housing (12) into a mounting bore - has a specific inflow and outflow point, and that the radial bore (59) of the fluid pathway (59, 60) opens into the control-pressure region (A) positioned opposite the outflow point.

13. A hydraulic valve according to Claim 12, **characterised in that** an uneven number of radial bores (26) evenly distributed around the circumference of the valve housing (12) follow a course between the control-pressure region (A) and the valve bore (13), **in that** one of these radial bores (26) is directed towards the outflow point and **in that** the radial bore (59) of the fluid pathway (59, 60) is positioned opposite this radial bore (26).

## Revendications

1. Vanne hydraulique, en particulier vanne de régulation de pression à réglage proportionnel, comprenant un électroaimant (10) qui comprend une bobine (33) et un induit magnétique mobile (40), lequel est situé dans une chambre à induit (39) entourée par la bobine (33) et délimitée axialement par une pièce polaire (34) qui pénètre dans la bobine (33) et à laquelle est relié un poinçon d'induit (42), lequel traverse un perçage central (43) de la pièce polaire (34), comprenant une partie hydraulique (11) qui possède un boîtier de vanne (12), réalisé sous forme de douille à encastrer, qui s'applique axialement contre la pièce polaire (34) et qui possède un perçage de vanne axial (13), ledit perçage étant relié via au moins un perçage radial (27) à une zone à basse pression (T) qui entoure le boîtier de vanne (12), ladite partie hydraulique comprenant également un tiroir de vanne (14) disposé dans le perçage de vanne (13) et mobile axialement depuis l'induit magnétique (40) par l'intermédiaire du poinçon d'induit (42), dans laquelle une chambre à fluide (44, 56) est formée entre la pièce polaire (34) et le boîtier de vanne (12), avec une communication hydraulique ouverte prévue d'une part depuis la chambre à fluide jusqu'à la chambre d'induit (39) et d'autre part depuis la chambre à fluide jusqu'à la zone à basse pression (T) qui entoure le boîtier de vanne (12),
**caractérisée en ce que** la communication hydraulique entre la chambre à fluide (44, 56) et la zone à basse pression (10) est située à l'extérieur d'un perçage radial (27) qui se trouve dans une communication hydraulique entre le perçage de vanne (13) et la zone à basse pression (T).

2. Vanne hydraulique selon la revendication 1, **caractérisée en ce que** la communication hydraulique entre la chambre à fluide (44, 56) et la zone à basse pression (T) consiste en un perçage axial de compensation (57) borgne ouvert vers la chambre à fluide (44, 56) et en un perçage radial de compensation (58) ouvert vers l'extérieur dans la zone à basse pression (T), rejoignant le perçage axial de compensation (57), et se terminant à distance du perçage de vanne (13).

3. Vanne hydraulique selon la revendication 2, **caractérisée en ce que** la zone à basse pression (T) est, au moins après le montage du boîtier de vanne (12) dans un perçage de montage, un canal périphérique (48) avec un emplacement d'échappement (49), et **en ce que** le perçage radial de compensation (48) débouche dans la zone à basse pression (T) à l'opposé de l'emplacement d'échappement (49).

4. Vanne hydraulique selon la revendication 3, **caractérisée en ce qu'**un nombre impair de perçages radiaux d'évacuation (27), régulièrement répartis sur la périphérie du boîtier de vanne (12), s'étendent entre la zone à basse pression (T) et le perçage de vanne (13), **en ce que** l'un de ces perçages radiaux d'évacuation (27) est dirigé vers l'emplacement d'échappement (49), et **en ce que** le perçage radial de compensation (58) est à l'opposé de ce perçage radial d'évacuation (27).

5. Vanne hydraulique selon l'une des revendications précédentes, **caractérisée en ce que** le boîtier de vanne (12) comporte un tronçon (17) en forme de disque, lequel est enfilé dans un boîtier en tôle (30) en forme de godet de l'électroaimant (10) et est pourvu à l'extérieur d'une gorge annulaire (48), ladite gorge étant recouverte par le boîtier en tôle (30) à l'exception d'un emplacement (49) auquel le boîtier en tôle (30) est découpé, et représentant la zone à basse pression (T).

6. Vanne hydraulique selon l'une des revendications précédentes, **caractérisée en ce que** le poinçon d'induit (42) est fixé dans une traversée centrale (41) de l'induit magnétique (40) et est guidé en coulissement étanche dans la pièce polaire (34), **en ce que** dans la communication hydraulique entre la chambre à fluide (44, 56) et la chambre à induit (39) est ménagé un perçage axial (54) du poinçon d'induit (42), ledit perçage étant ouvert sur le côté frontal du poinçon d'induit (42) qui se trouve à l'intérieur de la chambre à induit (39), et **en ce que** les deux chambres à induit partielles (52, 53) devant les deux côtés frontaux de l'induit magnétique (40) sont reliées l'une à l'autre sur le plan hydraulique par l'intermédiaire de celui-ci.

7. Vanne hydraulique selon la revendication 6, **caractérisée en ce que** les deux chambres à induit partielles (52, 53) sont reliées l'une à l'autre sur le plan hydraulique via au moins un canal (51) entre le tronçon du poinçon d'induit (42) enfilé dans l'induit magnétique (40) et l'induit magnétique (40).

8. Vanne hydraulique selon la revendication 7, **caractérisée en ce que** le poinçon d'induit (42) est de forme circulaire à l'extérieur, et le canal (51) est formé par une déviation de la section de la traversée centrale (41) dans l'induit magnétique (40) vis-à-vis de la forme circulaire.

9. Vanne hydraulique selon l'une ou l'autre des revendications 7 et 8, **caractérisée en ce que** le canal (51) s'étend axialement.

10. Vanne hydraulique selon l'une des revendications précédentes, **caractérisée en ce qu'**elle est une vanne de régulation de pression à réglage proportionnel au moyen d'un électroaimant (10), la vanne comprenant un boîtier de vanne (12) réalisé sous forme de douille à encastrer avec un perçage de vanne axial (13) qui est relié par au moins un perçage radial respectif (25, 26, 27) à une chambre à haute pression extérieure périphérique (P), à une chambre à basse pression extérieure périphérique (T), et à une chambre à pression de régulation (A) périphérique et disposée axialement entre la chambre à haute pression (P) et la chambre à basse pression (T), et comprenant un tiroir de vanne (14) disposé dans le perçage de vanne (13), ledit tiroir pouvant être attaqué par une force magnétique dans le sens d'une mise en communication de la chambre à pression de régulation (A) avec la chambre à haute pression (P) et par la pression de régulation dans le sens d'une mise en communication de la chambre à pression de régulation (A) avec la chambre à basse pression (T), un trajet de fluide (59, 60) étant prévu entre la chambre à pression de régulation (A) et une chambre à pression (20), laquelle se trouve devant le tiroir de vanne (14) à l'extrémité du boîtier de vanne (12) détourné de l'électroaimant (10), à l'extérieur des perçages radiaux (26) qui s'étendent entre la chambre à pression de régulation (A) et le perçage de vanne (13).

11. Vanne hydraulique selon la revendication 10, **caractérisée en ce que** le trajet de fluide est un perçage axial borgne (60) ouvert vers la face frontale (19) du boîtier de vanne (12), et comprend un perçage radial (59) ouvert vers la chambre à pression de régulation (A), rejoignant le perçage axial (60), et se terminant à distance du perçage de vanne (13).

12. Vanne hydraulique selon la revendication 11, **caractérisée en ce que** la zone à pression de régulation (A) possède, au moins après le montage du boîtier de vanne (12) dans un perçage de vanne, un emplacement déterminé d'alimentation et d'évacuation, et **en ce que** le perçage radial (59) du trajet de fluide (59, 60) débouche dans la zone à pression de régulation (A) à l'opposé de l'emplacement d'évacuation.

13. Vanne hydraulique selon la revendication 12, **caractérisée en ce qu'**il est prévu un nombre impair de perçages radiaux (26) régulièrement répartis sur la périphérie du boîtier de vanne (12) et s'étendant entre la zone à pression de régulation (A) et le perçage de vanne (13), **en ce que** l'un de ces perçages radiaux (26) est dirigé vers l'emplacement d'évacuation, et **en ce que** le perçage radial (59) du trajet de fluide (59, 60) est à l'opposé de ce perçage radial (26).
